(19) Europäisches Patentamt
European Patent Office
Office européen des brevets

(11) Publication number: 0 156 729
A2

# (12) EUROPEAN PATENT APPLICATION

(21) Application number: 85400545.1

(22) Date of filing: 21.03.85

(51) Int. Cl.[4]: C 07 F 9/141
C 07 F 9/60, A 01 N 57/04
A 01 N 57/08

(30) Priority: 23.03.84 IT 2020184
05.12.84 IT 2388484

(43) Date of publication of application:
02.10.85 Bulletin 85/40

(84) Designated Contracting States:
AT BE CH DE FR GB LI NL

(71) Applicant: Montedison S.p.A.
31, Foro Buonaparte
I-20121 Milan(IT)

(72) Inventor: Paolucci, Paride
34 Via Europa
I-20097 San Donato Milanese Milan(IT)

(72) Inventor: Gozzo, Franco
52/A Via Triulziana
I-20097 San Donato Milanese Milan(IT)

(72) Inventor: Mirenna, Luigi
4 via Gamboloita
I-20139 Milan(IT)

(74) Representative: Hirsch, Marc-Roger
34 rue de Bassano
F-75008 Paris(FR)

## (54) Inner salts of phosphonic acid useful in the protection of plants from pathogenesis caused by fungi.

(57) There invention describes inner salts of phosphonic acid having the general formula:

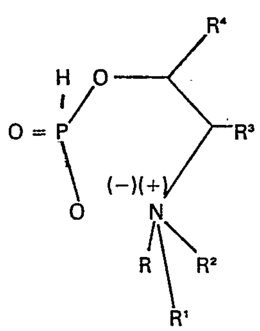

wherein:

R is H, $C_1$–$C_2$ alkyl;

$R^1$ and $R^2$, identical or different, are H, $C_3$–$C_4$ alkyl when R is H, $C_1$–$C_{12}$ alkyl when R is $C_1$–$C_2$ alkyl, $C_3$–$C_5$ alkenyl or alkynyl when R is H, $C_3$–$C_{12}$ alkenyl or alkynyl when R is $C_1$–$C_2$ alkyl, alkoxy-alkyl, aryl when R is $C_1$–$C_2$ alkyl, aralkyl, or, together with N, form a heterocycle;

$R^3$ and $R^4$, identical or different, are H, $C_1$–$C_4$ alkyl, phenyl. Said inner salts are useful in the defence of plants (vine and tomato) from pathogenesis due to fungi.

They are endowed with systemic properties.

EP 0 156 729 A2

INNER SALTS OF PHOSPHONIC ACID USEFUL IN THE PROTECTION OF PLANTS FROM PATHOGENESIS CAUSED BY FUNGI

The present invention relates to inner salts of phosphonic acid, to a process for preparing them and to their subsequent use in agrarian applications.

Published literature, such as published French patent application 2 254 276, describes fungicidal compositions containing, as an active substance, derivatives of phosphonic acid having the general formula:

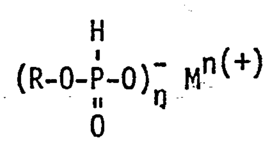

wherein:

R is an optionally substituted alkyl, alkenyl, alkynyl, aryl or heterocyclic radical; and

M is a cation of ammonium or of a metal.

The Applicant has now found inner salts of phosphonic acid, which are the object of the present invention and which have never been described in literature, having the general formula (I):

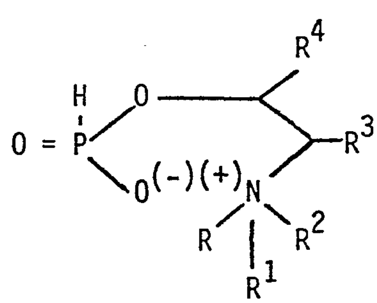

(I)

wherein:

R is H, or a $C_1$-$C_2$ alkyl radical;

$R^1$ and $R^2$, identical or different, are H, $C_3$-$C_4$ alkyl when R is H, $C_1$-$C_{12}$ alkyl when R is $C_1$-$C_2$ alkyl, $C_3$-$C_5$ alkenyl or alkynyl when R is H, $C_3$-$C_{12}$ alkenyl or alkynyl when R is $C_1$-$C_2$ alkyl, $C_1$ to $C_{12}$ alkoxyalkyl; the 1 to 12 carbon atoms forming both alkyl and alkoxy moieties, aryl, in particular phenyl, when R is $C_1$-$C_2$ alkyl, aralkyl,
or $R^1$ and $R^2$, together with the N atom form a non-aromatic heterocycle formed of 5 or 6 atoms, possibly containing other heteroatoms, in particular O, N and S, and optionally substituted by $C_1$-$C_4$ alkyls and by alkylcarbonyls having from 1 to 4 carbon atoms in the alkyl moiety, said heterocycles being preferably pyrrolidine, piperidine, morpholine, thiomorpholine, piperazine;
$R^3$ and $R^4$, identical or different, are H or $C_1$-$C_4$ alkyl or phenyl radicals.

The compounds of formula (I) present the property of protecting plants from pathogenesis due to fungi, and are consequently utilizable in agrarian applications.

A further object of the present invention are compositions containing the compounds of formula (I) as an active substance.

Still another object of this invention consists in the synthesis processes for obtaining the compounds of formula (I).

Further objects of the present invention can be inferred from the following description and examples.

The compounds of formula (I), in which R is $C_1$-$C_2$ alkyl, have been prepared by reacting a dialkylphosphite, preferably a dimethylphosphite or diethylphosphite, with a 2-hydroxyalkylamine according to the following reaction scheme:

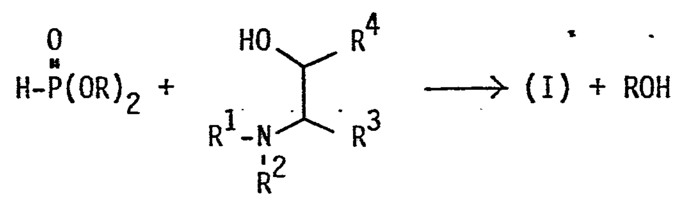

where:
R, $R^1$, $R^2$, $R^3$ and $R^4$ are the same as defined herein-before.

The reaction is conducted by bringing the two reagents into contact in a inert solvent, by heating the resulting solution to a temperature ranging from 130° to 190°C for a period of from 1 to 6 hours

and by removing, at a final step, the alcohol which has formed, while the product to be obtained is separated from the solvents by means of conventional separation, purification, extraction and crystallization techniques, usually adopted for isolating the products of organic syntheses.

The inert solvents which are useful in the synthesis process of the present invention are selected from the classes of apolar solvents or of aprotic polar solvents.

Some examples of apolar solvents are the halobenzenes, in particular 1,2-dichlorobenzene, the xylenes, decaline and tetraline.

Some examples of aprotic polar solvents are dimethylformamide, acetonitrile.

In particular, according to a preferred method of the invention, stoichiometrically equivalent amounts of a dialkylphosphite and of a 2-hydroxyalkylamine are reacted in 1,2-dichlorobenzene while heating the solution at reflux for a period ranging from 1 to 5 hours. Thereafter the lower alcohol is distilled off from the reaction atmosphere. Once all the alcohol has been removed, the solution is cooled and the ionic product is isolated by removing the reaction solvent. The product to be obtained can finally be purified by treatment with a polar solvent, such as, for example, acetonitrile, from which it is separated by filtration or by decantation.

Examples of compounds prepared according to the process described in detail in the following example 1, method B, are indicated in Table I.

The compounds of formula (I), in which R is H, are prepared by reacting under heating a dialkylphosphite, preferably dimethylphosphite or diethylphosphite, with a 2-hydroxyalkylamine, in the presence of at least a stoichiometric amount of water, according to the following reaction scheme:

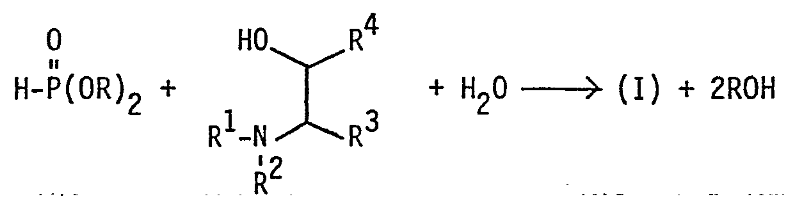

wherein:

$R^1$, $R^2$, $R^3$ and $R^4$ are the same as defined herein-above.

## TABLE I

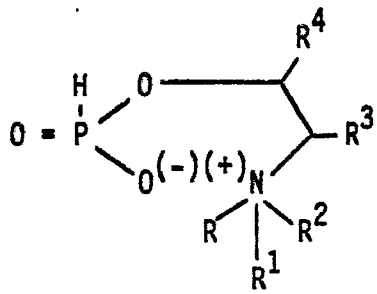

(I)

| Compound n° | R | $R^1$ | $R^2$ | $R^3$ | $R^4$ | M.P. °C | | C % | H % | N % | P % |
|---|---|---|---|---|---|---|---|---|---|---|---|
| 1 | Me | Me | Me | H | H | 208-10 (dec.) | found | 34,93 | 9,33 | 8,20 | 18,10 |
| | | | | | | | calc. | 35,93 | 8,44 | 8,38 | 18,50 |
| 2 | Me | Et | Et | H | H | oil | found | 42,25 | 9,12 | 6,10 | 14,8 |
| | | | | | | | calc. | 43,07 | 9,30 | 7,18 | 15,8 |
| 3 | Et | Et | Et | H | H | 115-117 (dec.) | found | 47,00 | 10,40 | 7,06 | 14,70 |
| | | | | | | | calc. | 45,95 | 9,63 | 6,70 | 14,80 |
| 4 | Me | Me | Me | H | Me | 210-12 (dec.) | found | 38,67 | 9,10 | 7,47 | 17,1 |
| | | | | | | | calc. | 39,22 | 8,90 | 7,73 | 17,0 |
| 5 | Et | Me | Me | H | H | 178-80 (dec.) | found | 38,60 | 9,26 | 7,80 | 17,1 |
| | | | | | | | calc. | 39,77 | 8,90 | 7,73 | 17,2 |
| 6 | Me | 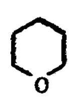 | | H | H | oil | found | 41,24 | 7,84 | 6,52 | 14,40 |
| | | | | | | | calc. | 40,20 | 7,70 | 6,70 | 14,80 |
| 7 | Me | 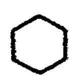 | | H | H | 218-20 (dec.) | found | 45,90 | 8,83 | 6,60 | 15,10 |
| | | | | | | | calc. | 46,37 | 8,75 | 6,76 | 14,90 |
| 8 | Me | Et | $C_6H_5$ | H | H | oil | found | 52,55 | 8,13 | 5,84 | |
| | | | | | | | calc. | 54,30 | 7,46 | 5,76 | |
| 9 | Me | Me | H | H | H | oil | found | 31,37 | 8,05 | 9,02 | 19,50 |
| | | | | | | | calc. | 31,37 | 7,90 | 9,15 | 20,23 |
| 10 | Me | Me | n-phenyl | H | H | oil | found | 48,52 | 9,94 | 6,26 | |
| | | | | | | | calc. | 48,42 | 9,93 | 6,27 | |

TABLE I (Continuation)

| Compound n° | R | $R^1$ | $R^2$ | $R^3$ | $R^4$ | M.P. °C | Elemental analysis | C % | H % | N % | P % |
|---|---|---|---|---|---|---|---|---|---|---|---|
| 11 | Me | Et | 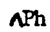 | H | H | oil | found<br>calc. | 56,28<br>56,02 | 7,77<br>7,83 | 5,22<br>5,44 | |
| 12 | Me | Me | Me | H | Ph | glassy solid | found<br>calc. | 53,90<br>54,30 | 7,52<br>7,46 | 5,50<br>5,76 | 12,4<br>12,7 |
| 13 | Me | Me | 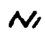 | H | H | oil | found<br>calc. | 44,28<br>43,52 | 8,75<br>8,35 | 7,12<br>7,25 | 15,8<br>16,0 |
| 14 | Me | Et | 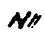 | H | H | oil | found<br>calc. | 46,04<br>46,82 | 8,00<br>7,86 | 6,58<br>6,82 | |
| 15 | Et | 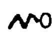 | H | H | H | oil | found<br>calc. | 42,30<br>42,66 | 8,75<br>8,95 | 6,50<br>6,22 | 14,3<br>13,8 |
| 16 | Et | 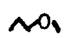 | H | H | H | waxy solid | found<br>calc. | 38,53<br>39,80 | 8,69<br>8,59 | 6,60<br>6,63 | 15,1<br>14,7 |
| 17 | Me | 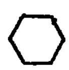 | | H | H | oil | found<br>calc. | 41,86<br>43,52 | 9,03<br>8,35 | 6,71<br>7,25 | 15,3<br>16,0 |
| 18 | Me | 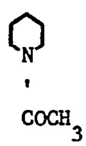 | | H | H | waxy solid | found<br>calc. | 43,84<br>43,20 | 7,42<br>7,65 | 11,09<br>11,19 | |
| 19 | Et | 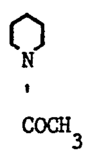 | | H | H | 260 (dec.) | found<br>calc. | 44,10<br>45,45 | 8,30<br>8,00 | 10,04<br>10,60 | |
| 20 | Me | 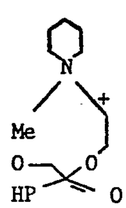 | | H | H | glassy solid | found<br>calc. | 36,13<br>36,37 | 7,98<br>7,32 | 8,26<br>8,48 | 18,4<br>18,7 |

The reaction is carried out by contacting the reagents in a polar or apolar solvent, by heating the resulting solution to a temperature ranging from 140° to 180°C and by removing from the reaction atmosphere the methyl or ethyl alcohol as it is formed.

The solvents which are utilized in the synthesis process of the present invention are selected from the classes of the apolar solvents, such as e.g. 1,2-dichlorobenzene, or of the protic polar solvents, such as e.g. methanol or a $H_2O$-methanol solution.

The type of solvent to be employed depends upon the type of 2-hydroxyalkylamine utilized.

In particular, if apolar solvents are utilized, stoichiometrically equivalent amounts of a dialkylphosphite, of a 2-hydroxyalkylamine and of water are reacted in 1,2-dichlorobenzene, while heating the mixture at reflux during a period of from 0.5 to 3 hours. The lower alcohol is then distilled off from the reaction atmosphere by gradually raising the mixture temperature to 170-180°C. Once all the alcohol had been removed, it was cooled down and the ionic product was separated from the apolar solvent.

The product thus obtained is purified by hot treatment with a lower alcohol (methanol, ethanol, isopropanol). After the final hot treatment, the compounds are generally present in the form of crystalline solids.

Examples of compounds prepared according to the process described in further detail in subsequent example 2, method C, are indicated in Table II.

If it is operated in protic polar solvents, the reaction is carried out by contacting stoichiometrically equivalent amounts of a dialkylphosphite and of a 2-hydroxyalkylamine in the presence of a solvent mixture consisting of water and methanol. The solution is heated while distilling off from the reaction atmosphere both the dissolving methanol and the lower alcohol (methanol or ethanol) which forms during the reaction.

The reacting mass is then introduced into a rotary evaporator under reduced pressure, while gradually raising the temperature to 140-160°C.

The residue obtained under these conditions is purified by means of a hot treatment with a lower alcohol (methanol, ethanol, isopropanol).

Examples of compounds prepared according to this method, which is described in further detail in subsequent example 2, method D, are indicated in Table II.

TABLE II

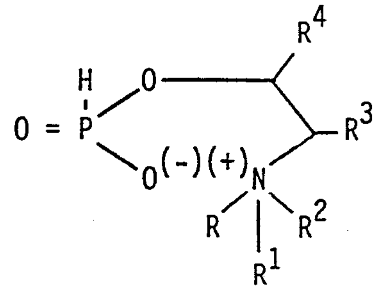

(I)

| Compound n° | $R^1$ | $R^2$ | $R^3$ | $R^4$ | M.P. °C | Molecular formula | Synthesis method | Elemental analysis | C % | H % | N % | P % |
|---|---|---|---|---|---|---|---|---|---|---|---|---|
| 21 | H | H | H | H | 198(dec.) | $C_2H_8NO_3P$ | C, D | found | 19,00 | 6,40 | 10,68 | 24,3 |
| | | | | | | | | calc. | 19,20 | 6,45 | 11,20 | 24,7 |
| 22 | H | H | H | Me | 182(dec.) | $C_3H_{10}NO_3P$ | C | found | 25,89 | 7,08 | 9,46 | 22,1 |
| | | | | | | | | calc. | 25,90 | 7,25 | 10,07 | 22,3 |
| 23 | H | H | H | Ph | 270(dec.) | $C_8H_{12}NO_3P$ | C | found | 47,85 | 5,72 | 6,09 | 15,7 |
| | | | | | | | | calc. | 47,76 | 6,01 | 6,96 | 15,4 |
| 24 | H | H | Et | H | 230(dec.) | $C_4H_{12}NO_3P$ | C | found | 31,34 | 8,02 | 8,72 | 20,1 |
| | | | | | | | | calc. | 31,38 | 7,90 | 9,17 | 20,2 |
| 25 | H | t-Bu | H | H | 232(dec.) | $C_6H_{16}NO_3P$ | C | found | 40,25 | 9,00 | 7,74 | 16,9 |
| | | | | | | | | calc. | 39,77 | 8,90 | 7,73 | 17,1 |
| 26 | 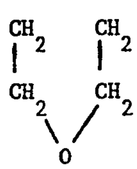 | | H | H | 222(dec.) | $C_6H_{14}NO_4P.H_2O$ | D | found | 33,93 | 7,56 | 6,27 | 14,3 |
| | | | | | | | | calc. | 33,80 | 7,57 | 6,57 | 14,5 |
| 27 | 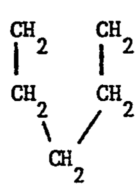 | | H | H | 228(dec.) | $C_7H_{16}NO_3P.H_2O$ | D | found | 39,83 | 8,67 | 6,42 | 14,7 |
| | | | | | | | | calc. | 39,81 | 8,59 | 6,63 | 14,7 |

The compounds of general formula (I) present the property of protecting the plants from fungi-induced pathogenesis. In fact, when applied to the leaves' surfaces of plants such as e.g. tomato and vine, said compounds immunize such plants against infections caused by pathogenic fungi such as, for example, those belonging to the order of Phycomycetes, in particular Phytophthora infestans and Plasmopara viticola, respectively. Such an application, which is called preventive application, makes it possible to obtain a protection effective at least 7 days after treatment by inoculation of the plant with the pathogenic stock.

On the other hand, the defence action also occurs in the case of treatment of plants already inoculated with the pathogenic stock: in such a case, the application has a curative effect, due to the systemic properties of the products forming the object of the present invention.

When a treatment of this type is carried out for curing vine plants in which the infection caused by Plasmopara viticola is still active, the Applicant has surprisingly found that the compounds of the present invention prove to be very effective. This effect is fully unexpected since the check compound (Aliette), representative of the phosphorous acid salts known up to now, when applied under the same conditions, does not exhibit any activity (see Table III).

"Systemic properties" means a complex of characteristics which permit these compounds to penetrate the plants either through the leaves or through the roots and to migrate in the plant's vascular systems so as to act in an immunizing or curative way also in the parts not directly treated, but subject to infecting attacks.

For practical utilizations in agriculture it is often advisable to have compositions available containing one or more compounds of formula (I) as an active substance.

These compositions can be applied to every part of the plant, such as e.g. leaves, stems, branches and roots, or to the seeds prior to sowing, or also to the earth around the plant. It is possible to utilize compositions in the form of dry powders, wettable powders, emulsifiable concentrates, slurries or pastes, granulates, solutions, suspensions and the like: the choice of the type of composition will depend upon the intended specific use. The compositions are prepared in a conventional manner, for example, by diluting or dissolving the active substance in a dissolving medium and/or in a solid diluent, optionally in the presence

of surfactants. As solid diluents, or carriers, the following may be used: silica, kaolin, bentonite, talc, kieselguhr, dolomite, calcium carbonate, magnesia, gypsum, clays, synthetic silicates, attapulgite, sepiolite. As liquid diluents besides water, of course, various types of solvents may be used, for example aromatics (benzoyl, xylols or mixtures of alkylbenzols), chloroaromatics (chlorobenzol), paraffins (petroleum fractions), alcohols (methanol, propanol, butanol), amines, amides (dimethylformamide), ketones (cyclohexanone, acetophenone, isophorone, ethyl-amyl-ketone), esters (isobutyl acetate). As surfactants, the following may be used: sodium salts, calcium salts, triethanolamine of alkylsulphates, alkylsulphonates, alkyl-arylsulphonates, polyethoxylated alkylphenols, fat alcohols condensed with ethylene oxide, polyoxyethylated fat acids, sorbitol polyoxyethylated esters, polyoxyethylated fats, ligninsulphonates. The compositions may also contain special additives for particular purposes, for example adhesion-promoting agents such as arabic gum, polyvinyl alcohol, polyvinylpyrrolidone. If desired, it is also possible to add to the compositions of the present invention other active compatible substances, such as fungicides, herbicides, phyto-growth regulators, insecticides, fertilizers.

The concentration of active substance in said compositions may vary over a wide range, depending upon the active compound, the culture, the pathogenic fungus, the environmental conditions and the type of formulation utilized. When emulsifiable concentrates are used, they are diluted until a concentration of active substance ranging from 0.1 to 5 g/l of aqueous emulsion is obtained.

The following examples are given to illustrate the present invention.

EXAMPLE 1

Preparation of 2-(trimethylammonium)-ethyl phosphite inner salt (compound No. 1).

Method A

A solution consisting of 22 g of dimethylphosphite and 17.8 g of 2-dimethylamino-ethanol in 50 ml of N,N-dimethylformamide was heated at reflux during 6 hours. After this treatment the reacting mass was concentrated by distilling off, at normal pressure, the reaction methanol and about 20 ml of the solvent.

The mixture was then evaporated in a rotary evaporator at a residual pressure of 15 torr, the bath temperature being raised to 80°C.

The residue obtained was treated under intense stirring with 100 ml of acetonitrile, thus leading to a solid which was separated by filtration and dried in a drier under vacuum. 24 g of product were obtained.
The compound appeared as a white hygroscopic solid.
M.P. = 208-210°C (dec).
I.R. (nujol) 2330 $cm^{-1}$, 1230 $cm^{-1}$, 1060 $cm^{-1}$.
Analysis of $C_5H_{14}NO_3P$:

| | C | H | N | P |
|---|---|---|---|---|
| - calc. ...... | 35.93% | 8.44% | 8.38% | 18.50% |
| - found ...... | 34.68% | 9.45% | 8.35% | 18.00% |

Method B

A solution consisting of 22 g of dimethylphosphite and 17.8 g of 2-dimethylamino-ethanol in 50 ml of 1,2-dichlorobenzene was heated at reflux during 5 hours. After this period of time, the methanol which had formed during the reaction, was distilled off from the mixture under normal pressure.

After this step, the semisolid phase so formed was separated from the overlying liquid phase and then treated with 100 ml of acetonitrile under intense stirring until a crystalline solid was obtained. This solid is separated by filtration and dried in a drier under vacuum. The product obtained is an hygroscopic white solid.
22.5 g of product were obtained.
M.P.: 208-210°C (dec).
I.R. (nujol) 2330 $cm^{-1}$, 1230 $cm^{-1}$, 1060 $cm^{-1}$.
Analysis of $C_5H_{14}NO_3P$:

| | C | H | N | P |
|---|---|---|---|---|
| - calc. ...... | 35.93% | 8.44% | 8.38% | 18.50% |
| - found ...... | 34.93% | 9.33% | 8.20% | 18.10% |

EXAMPLE 2

Preparation of 2-ammonium-ethyl phosphite inner salt (compound No. 2).

Method C

A solution consisting of 12.2 g of 2-amino-ethanol and of 3.6 g of water was gradually added, at room temperature, to a solution of 22 g of dimethylphosphite in 50 ml of 1,2-dichlorobenzene, under intense stirring. Once the addition had been achieved the mixture was refluxed for 30 minutes, and successively the methanol released during the reaction was slowly distilled off, until a temperature of 170°C was reached. The

mixture was then cooled and the solvent was separated by decantation from the insoluble oil-like phase, which was then refluxed during 1 hour with 50 ml of methanol.

In this way a solid-in-suspension was obtained, which was separated by filtration and dried in a drier under vacuum. The compound obtained had a weight of 14.7 g and is under the form of a white solid.

M.P.: 198-200°C (dec).

I.R. (nujol) 2340, 1220, 1070 $cm^{-1}$.

Analysis of $C_2H_8NO_3P$:

| | C | H | N | P |
|---|---|---|---|---|
| - calc. ...... | 19.20% | 6.45% | 11.20% | 24.7% |
| - found ...... | 19.99% | 6.40% | 10.68% | 24.3% |

Method D

A solution consisting of 12.2 g of 2-aminoethanol, 25 ml of methanol and 25 ml of water was added dropwise, at room temperature, to 22 g of dimethylphosphite dissolved in a mixture of 50 ml of methanol and 25 ml of water, under intense stirring. Once the addition had been achieved the solution was heated by slowly distilling off the methanol from the reaction atmosphere. Successively, the reaction mass was transferred into a rotary evaporator and it was gradually heated, under reduced pressure (15 Torr) until a temperature of about 140°C was reached. Heating was maintained under these conditions until the weight of the residue became constant.

25 g of a white solid residue were thus obtained, which was refluxed under stirring with 50 ml of ethanol. From the cooled ethanol suspension, a white solid was separated by filtration; after drying the solid obtained, had a weight of 22.6 g.

M.P.: 198-200°C (dec).

I.R. (nujol) 2340, 1220, 1070 $cm^{-1}$.

Analysis of $C_2H_8NO_3P$:

| | C | H | N | P |
|---|---|---|---|---|
| - found ...... | 19.31% | 6.45% | 10.83% | 24.6% |

EXAMPLES 3 THROUGH 14

Both the curative and the preventive activities of the compounds according to the invention against the infections caused by grape mildew and tomato blight were determined according to the method described hereinbelow.

Determination of the activity against grape mildew (Plasmopara viticola (B. et C.) Berl. et de Toni)

- Curative activity

The leaves of vine plants cv. Dolcetto, cultivated in pot in a conditioned atmosphere at 25°C and 60% of relative humidity were sprayed on their upper face with an aqueous suspension of Plasmopara viticola conides (200,000 conides/cc). After 24 hours presence in a humidity-saturated atmosphere at 21°C, the plants were treated on both faces of their leaves' with the test products dissolved in a hydroacetone solution at 20% of acetone (vol./vol.). At the end of the incubation period (7 days), the importance of the infection was evaluated at sight according to an evaluation scale ranging from 100 (sound plant) to 0 (fully infected plant).

- Preventive activity

Vine leaves, cv. Dolcetto, cultivated in pot in a conditioned atmosphere at 25°C and 60% of relative humidity were treated by spraying both faces of their leaves with the test products dissolved in a hydroacetone solution (20% of acetone, vol./vol.). 7 days after treatment, the lower faces of the leaves were sprayed with an aqueous suspension of Plasmopara viticola conides (200,000 conides/cc). After 24 hours presence in a humidity-saturated atmosphere, at 21°C, the plants were transferred in an atmosphere of 70% of relative humidity, at 21°C, for the incubation period (7 days). The intensity of the infection was evaluated according to an evaluation scale ranging from 100 (sound plant) to 0 (fully infected plant).

Determination of the activity against tomato blight (Phytophthora infestans (Mont) de Bary)

- Curative activity

Leaves of tomato plants cv. Marmande, cultivated in pot in a conditioned atmosphere at 26°C and 60% of relative humidity, were sprayed on their lower face with an aqueous suspension of Phytophthora infestans conides (200,000 conides/cc).

After 24 hours presence in a humidity-saturated atmosphere, said leaves were treated with the test product, dissolved in a hydroacetonic solution at 20% of acetone (vol./vol.) by spraying of both faces of the leaves. At the end of the incubation period

(4 days), the infection was evaluated at sight according to an evaluation scale ranging from 100 (sound plant) to 0 (fully infected plant).

- Preventive activity

Leaves of tomato plants cv. Marmande cultivated in pot in a conditioned atmosphere at 26°C and 60% of relative humidity were sprayed with a hydroacetonic solution at 20% of acetone (vol./vol.) of the test products. After seven days, the leaves were infected by spraying their lower faces with an aqueous suspension of Phytophthora infestans conides (200,000 conides/cc). After 24 hours presence in a humidity-saturated atmosphere at 21°C, the plants were transferred for the incubation period (4 days) to another conditioned atmosphere at 70% of relative humidity and at 16°C. At the end of said period, the infection was evaluated according to an evaluation scale ranging from 100 (sound plant) to 0 (fully infected plant).

The data concerning the activity of compounds Nos. 1, 2, 3, 4, 6, 7, 17, 18, 19 and 20 of Table I and of compounds Nos. 21, 22 and 24 of Table II, at various doses, in comparison with Aliette® compound of formula:

$$\{C_2H_5-O-\overset{O}{\underset{H}{P}}-O^{(-)}\}_3Al$$

are indicated in the following Table III.

TABLE III

| Example N° | Compound N° | Dose g/l | Plasmopara viticola | | | | Phytophtora infestans | | | |
|---|---|---|---|---|---|---|---|---|---|---|
| | | | 3 | 2 | 2 | 1 | 2 | 1 | 2 | 1 |
| | | | curative activity | | preventive activity | | curative activity | | preventive activity | |
| 3 | 1 | | 100 | 74 | 100 | 82 | 100 | 70 | 100 | 60 |
| 4 | 2 | | | | 100 | | | | 100 | |
| 5 | 3 | | | | 100 | | | | 100 | |
| 6 | 4 | | | | 100 | | | | | |

**TABLE III (Continuation)**

| Example N° | Compound N° | Dose g/l | Plasmopara viticola | | | | Phytophtora infestans | | | |
|---|---|---|---|---|---|---|---|---|---|---|
| | | | 3 | 2 | 2 | 1 | 2 | 1 | 2 | 1 |
| | | | curative activity | | preventive activity | | curative activity | | preventive activity | |
| 7 | 6 | | 100 | 70 | 100 | 100 | 100 | 70 | 100 | 70 |
| 8 | 7 | | 81 | 70 | 100 | 81 | | | 100 | |
| 9 | 17 | | | | 100 | | | | | |
| 10 | 18 | | | | 100 | 60 | | | | |
| 11 | 19 | | | | 100 | 70 | | | | |
| 12 | 20 | | | | 100 | 85 | | | | |
| 13 | 21 | | 100 | 100 | 100 | 90 | 100 | 73 | 100 | 90 |
| 14 | 22 | | | | 80 | 60 | | | | |
| 15 | 24 | | | | 90 | 80 | | | | |
| 16 | Aliette | | 0 | 0 | 94 | 47 | 100 | 40 | 100 | 48 |

CLAIMS

1.- Compounds of general formula (I):

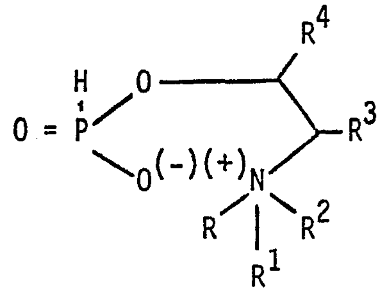

(I)

wherein:

R is H, a $C_1$-$C_2$ alkyl;

$R^1$ and $R^2$, identical or different, are H, a $C_3$-$C_4$ alkyl when R is H, a $C_1$-$C_{12}$ alkyl when R is a $C_1$-$C_2$ alkyl, a $C_3$-$C_5$ alkenyl or alkynyl when R is H, a $C_3$-$C_{12}$ alkenyl or alkynyl when R is a $C_1$-$C_2$ alkyl, an alkoxyalkyl having from 1 to 12 atoms of C in both the alkyl moiety and the alkoxy moiety; an aryl, in particular phenyl, when R is a $C_1$-$C_2$ alkyl, an aralkyl, or $R^1$ and $R^2$, together with the N atom, form a non-aromatic heterocycle having 5 or 6 atoms, optionally containing further heteroatoms selected from the group consisting of O, N and S, said heterocycle being optionally substituted by $C_1$-$C_4$ alkyls and alkylcarbonyls containing 1 to 4 carbon atoms in the alkyl moiety;

$R^3$ and $R^4$, identical or different, are H or a $C_2$-$C_4$ alkyl or a phenyl radical.

2.- The compounds according to claim 1, in which:

R is methyl, ethyl or H;

$R^1$ is methyl, ethyl or H.

$R^2$ is methyl, ethyl, phenyl, H or t.butyl;

$R^3$ is H or ethyl;

$R^4$ is H, methyl or phenyl.

3.- The compounds according to claim 1, in which:

R is methyl, ethyl or H;

$R^1$ and $R^2$, together with the N atom, form a heterocycle selected from the group consisting of morpholine and piperidine;

$R^3$ is H;

$R^4$ is H or methyl.

4.- The compound of formula:

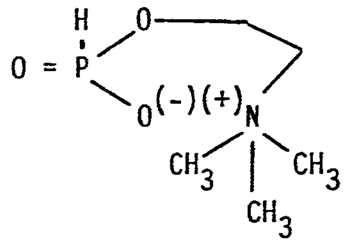

5.- The compound of formula:

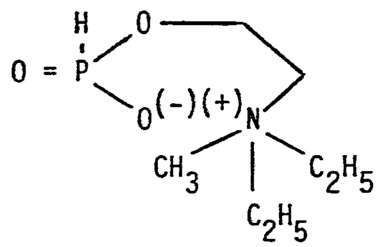

6.- The compound of formula:

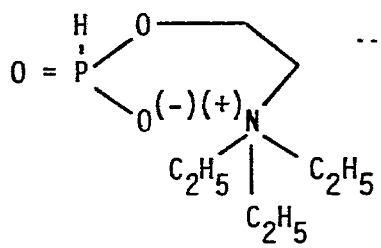

7.- The compound of formula:

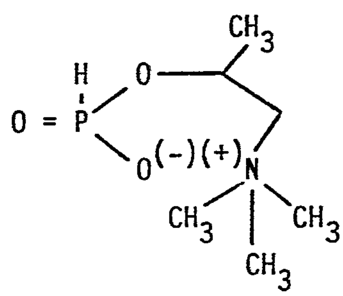

8.- The compound of formula:

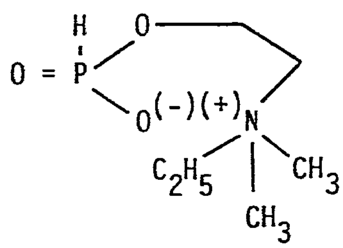

9.- The compound of formula:

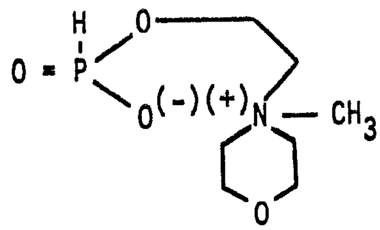

10.- The compound of formula:

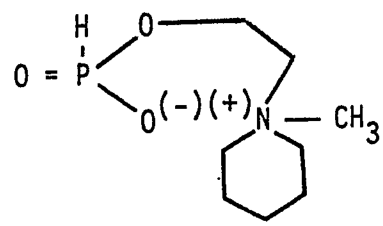

11.- The compound of formula:

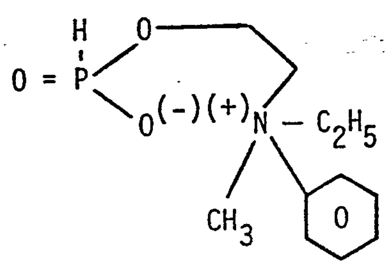

12.- The compound of formula:

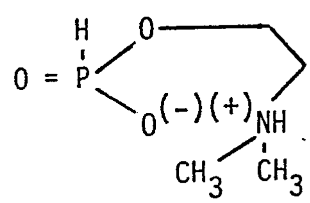

13.- The compound of formula:

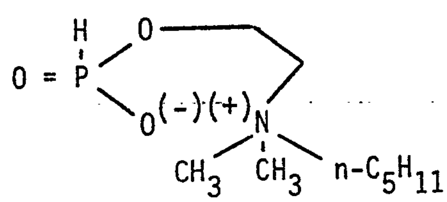

14.- The compound of formula:

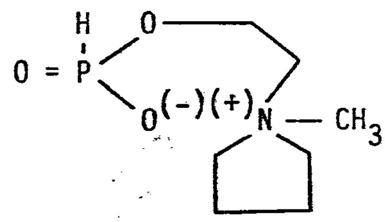

15.- The compound of formula:

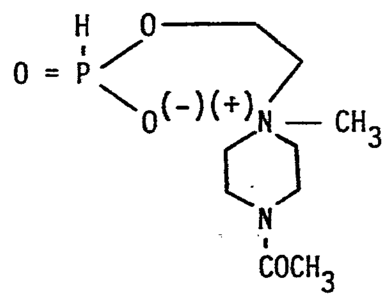

16.- The compound of formula:

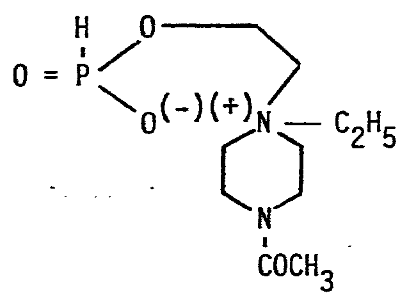

17.- The compound of formula:

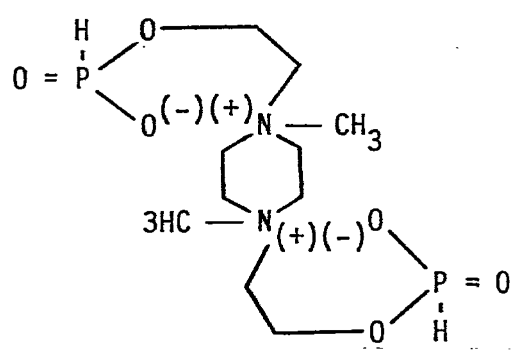

18.- The compound of formula:

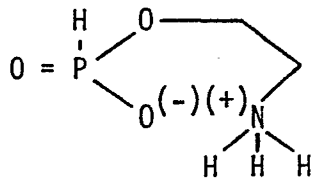

19.- The compound of formula:

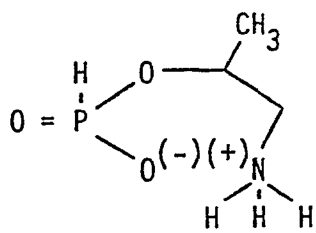

20.- The compound of formula:

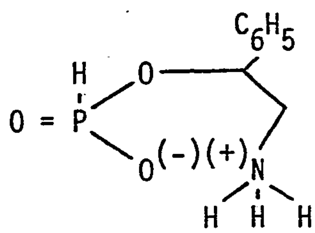

21.- The compound of formula:

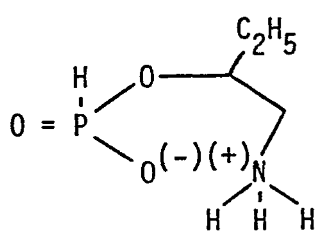

22.- The compound of formula:

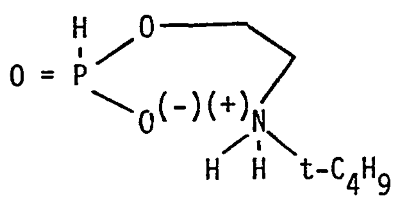

23.- The compound of formula:

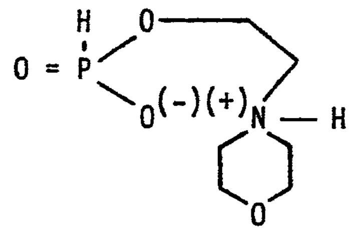

24.- The compound of formula:

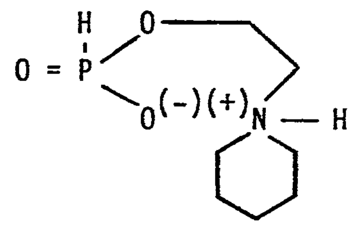

25.- A process for preparing the compounds of claims 1, in which in formula (I) R is a $C_1$-$C_2$ alkyl, consisting in reacting, in an inert solvent, stoichiometric amounts of a dialkylphosphite and of a 2-hydroalkylamine according to the following reaction scheme:

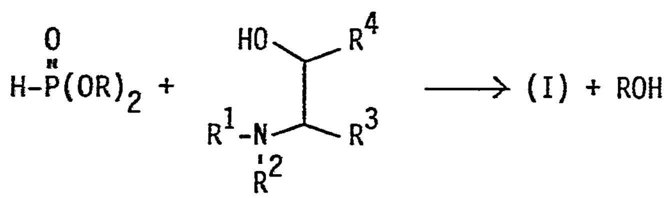

at the solvent reflux temperature.

26.- A process for preparing the compounds of claim 1, in which in formula I R is H, consisting in reacting, under heating, in a polar or apolar solvent, stoichiometric amounts of a dialkylphosphite, of a 2-hydroxyalkylamine and of water according to the reaction scheme:

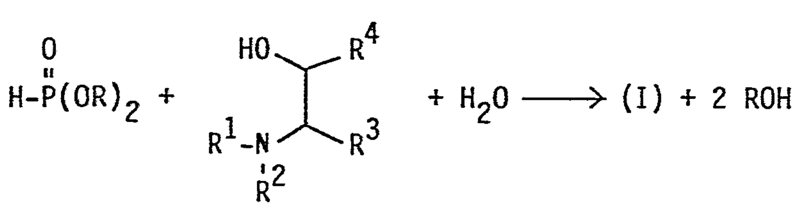

27.- A method of fighting infections caused by fungi in useful plants, consisting in applying to the plant, seeds or surrounding soil, when the infection due to fungi is expected or is still active, an effective amount of a compound according to claim 1, either as such or in the form of a suitable composition.

28.- The method of fighting infections caused by fungi in useful plants according to claim 27, where the infections are due to fungi Phytophthora infestans and Plasmopara viticola.

29.- Compositions having as an active substance one or more compounds according to claim 1, besides a solid or liquid carrier, and optionally other additives.